# EUROPÄISCHE PATENTSCHRIFT

(11) **EP 0 783 086 B1**
(45) Veröffentlichungstag und Bekanntmachung des Hinweises auf die Patenterteilung: **02.12.1998**
(21) Anmeldenummer: 96810793.8
(22) Anmeldetag: 14.11.1996
(51) Int. Cl.: F16L 47/02, B29C 65/34

(54) **Schweissmuffe**
Welding collar
Manchon à souder

(30) Priorität: 04.01.1996 CH 16/96
(43) Veröffentlichungstag der Anmeldung: 09.07.1997
(73) Patentinhaber: GEBERIT TECHNIK AG, CH-8645 Jona (CH)
(72) Erfinder: Rüdemann, Beat, 8618 Oetwil am See (CH)
(74) Vertreter: Groner, Manfred

(56) Entgegenhaltungen:
- EP-A- 0 399 081
- CH-A- 601 719
- CH-A- 612 489
- CH-A- 664 530
- DE-A-19 503 888
- US-A- 5 086 213

## Beschreibung

Die Erfindung betrifft eine Schweissmuffe nach dem Oberbegriff des Anspruchs 1. Eine solche Schweissmuffe ist aus der CH-A-601719 bekannt.

Eine Schweissmuffe dieser Art ist im Stand der Technik auch durch die WO 90/13 411 bekannt geworden. Bei dieser ist das Anzeigeelement in einer Bohrung in der Aussenseite des Muffenkörpers radial verschiebbar gelagert. Baut sich nun beim Schweissvorgang zwischen den zu verbindenden Teilen und der Innenseite des Muffenkörpers ein Schweissdruck auf, so wird das Anzeigeelement durch plastifizierte Masse radial nach aussen bewegt und steht schliesslich an der Aussenseite des Muffenkörpers tastbar und sichtbar vor. Das Anzeigeelement ist durch Reibschluss oder mit einer Feder so in der Ausnehmung gelagert, dass bei einer Überkopfmontage der Schweissmuffe das Anzeigeelement nicht durch die Schwerkraft von selbst bereits vor dem Schweissvorgang in die Endlage fällt. Die in dieser Schrift offenbarten Ausführungsbeispiele erfordern jeweils einen vergleichsweise hohen Aufwand für die Bearbeitung des Muffenkörpers und die Lagerung des Anzeigestiftes.

Im Stand der Technik ist eine ähnliche Schweissmuffe durch die EP-A-0 173 174 bekannt geworden. Das Anzeigeelement ist hier ein Stift, der einen Kolben aufweist und in einem geschlossenen zylinderförmigen Hohlraum des Muffenkörpers verschiebbar gelagert ist. Die Herstellung des geschlossenen Hohlraumes ist nicht ganz einfach. Auch in dieser Schrift sind mehrere Ausführungen gezeigt, die sicherstellen sollen, dass der Kolben nicht durch eine ungewollte Bewegung in die Endlage gelangt. Beispielsweise wird hier vorgeschlagen, den Kolben auf seiner Umfangsfläche mit reibungserzeugenden Lamellen zu versehen.

Der Erfindung liegt die Aufgabe zugrunde, eine Schweissmuffe der genannten Art zu schaffen, die einfacher herstellbar ist. Die Aufgabe ist bei einer gattungsgemässen Schweissmuffe gemäss Anspruch 1 gelöst. Der für die Lagerung des Anzeigeelementes vorgesehene Teil kann separat zum Muffenkörper als Spritzgussteil hergestellt werden und weist dann vorzugsweise bereits die für die Lagerung des Anzeigeelementes notwendigen Mittel auf. Die Bearbeitung des Muffenkörpers ist dann wesentlich einfacher als bisher und kann sich auf eine zylindrische Vertiefung in der Aussenseite beschränken, die ebenfalls spritzgiesstechnisch keine Schwierigkeiten bereitet.

Nach einer Weiterbildung der Erfindung ist das Anzeigeelement vorzugsweise federnd auslenkbar gelagert. Da das Anzeigeelement an der Aussenseite des Muffenkörpers angeordnet ist, kann dies in einfacher Weise, beispielsweise mit einem elastischen Steg, erfolgen. Dieser Steg hält dann das Anzeigeelement mit einer genauer definierten Kraft in der Ausgangslage.

Nach einer Weiterbildung der Erfindung ist das Anzeigeelement im Berührungsschutz für einen Anschlussstecker untergebracht. Ein solcher Berührungsschutz ist bei Schweissmuffen bereits üblich und dieser übernimmt damit gleichzeitig die Lagerung des Anzeigeelementes.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert.

Es zeigen:
- Figur 1: schematisch einen Schnitt durch einen Teil einer erfindungsgemässen Schweissmuffe,
- Figur 2: eine Teilansicht der Schweissmuffe gemäss Figur 1, und
- Figur 3: schematisch einen Schnitt durch eine Schweissverbindung der erfindungsgemässen Schweissmuffe mit Leitungsteilen.

Die Schweissmuffe 1 weist einen hülsenförmigen Muffenkörper 2 aus einem thermoplastischen Material auf, in den innenseitig ein elektrischer Widerstandsdraht 3 eingelegt ist. Dieser Draht 3 ist an Kontaktstiften 4 in bekannter Weise an einer Stromquelle anschliessbar. Die beiden Kontaktstifte 4 sind jeweils von einem hülsenförmigen Ansatz 20 eines Berührungsschutzkörpers 7 umgeben. Dieser Körper 7 ist ein Spritzgussteil aus einem thermoplastischen Kunststoff und an der Aussenseite 6 des Muffenkörpers 2 angeschweisst. Denkbar ist auch eine andere Befestigung des Körpers 7 am Muffenkörper 2, beispielsweise mittels einer hier nicht gezeigten Steckverbindung.

Der Muffenkörper 2 ist in bekannter Weise mit einer Schrumpfreserve versehen, derart, dass beim Schweissvorgang durch das Schrumpfen des Muffenkörpers 2 und die Volumenvergrösserung der plastifizierten Kunststoffmasse im Schweissbereich der Druck ansteigt. Dieser Druckanstieg wird mit einem Anzeigeelement 10 sichtbar gemacht, das in einer Ausnehmung 15 des Körpers 7 gelagert ist.

Das Anzeigeelement 10 ist ein einstückiges Spritzgussteil aus einem geeigneten Kunststoff und weist einen Fuss 11, einen federnden Steg 12 sowie einen Kopf 13 auf. Der Fuss 11 ist mit einem Stift 17 versehen, der in eine korrespondierende Vertiefung 26 des Körpers 7 eingreift und den Fuss 11 zwischen der Aussenseite 6 des Muffenkörpers und einer Wandung 22 des Körpers 7 unverrückbar festhält. Der Kopf 13 ist über den federnden Steg 12 mit dem Fuss 11 verbunden und liegt über einer zylindrischen Ausnehmung 8 des Muffenkörpers 2 an einem Stift 9 an, der sich etwa mittig in der Ausnehmung 8 befindet und der am Grund der Ausnehmung am Muffenkörper 2 angeformt ist. Die Wurzel des Stiftes 9 befindet sich in einem Bereich des Muffenkörpers 2, der beim Schweissvorgang plastifiziert wird.

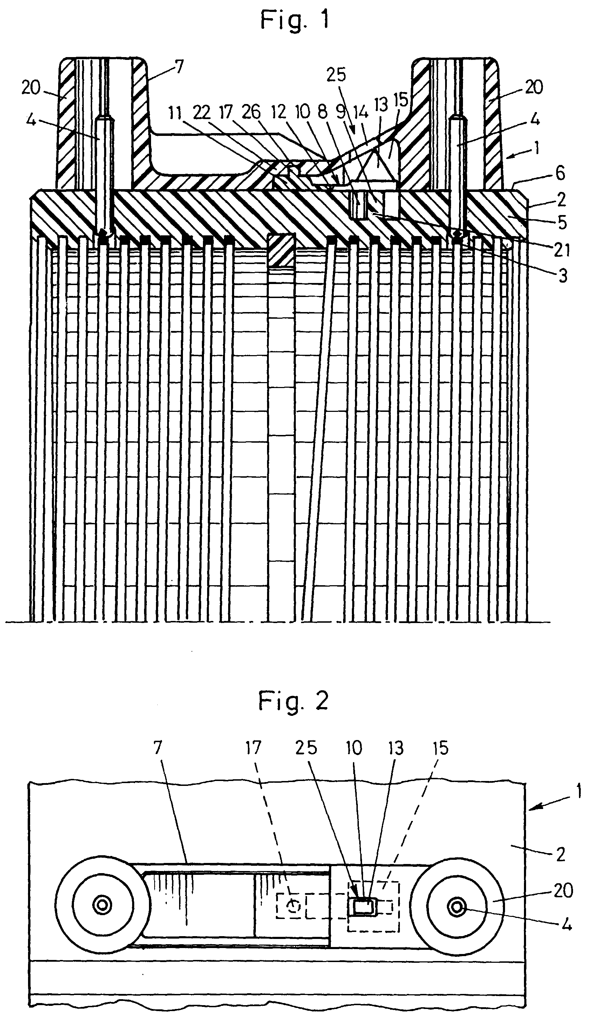

Die Wandung 22 besitzt ein viereckiges, sich nach aussen konisch verjüngendes Fenster 14, das bezüglich der Aussenseite 6 des Muffenkörpers 2 wie in Figur 1 ersichtlich geneigt ist und über dem Kopf 13 des Anzeigeelementes 10 angeordnet ist.

Nachfolgend wird die wirkungsweise der Anzeigevorrichtung erläutert.

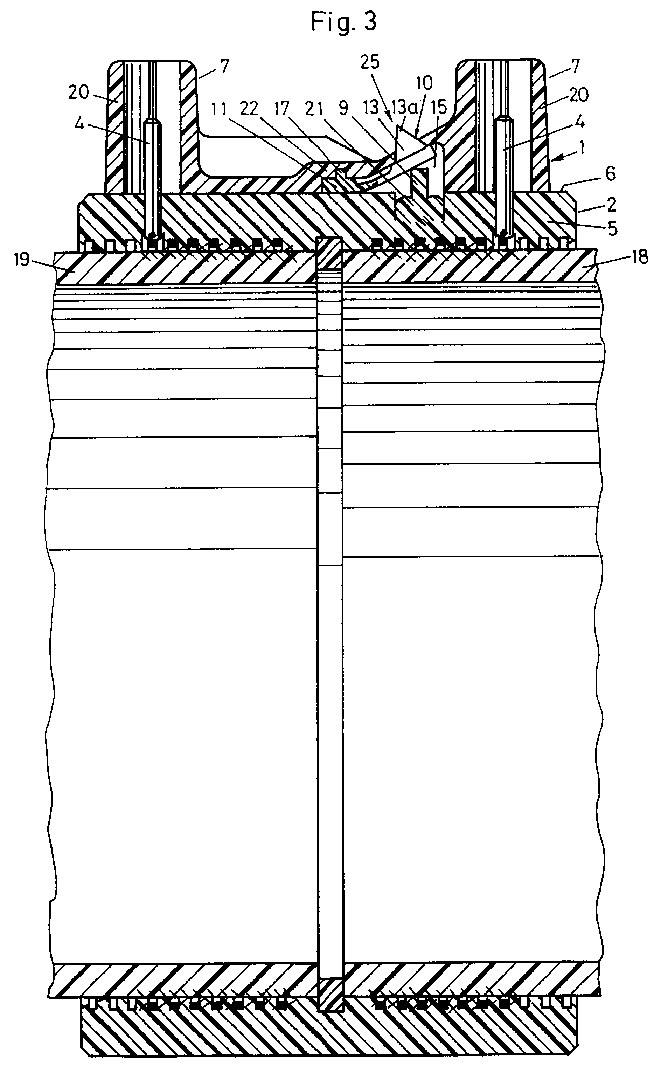

Baut sich während des Schweissvorganges der obenerwähnte Druck auf, so wird die plastifizierte Wurzel 21 des Stiftes 9 radial nach aussen angehoben, wodurch der Stift 9 in der Ausnehmung 8 angehoben wird. Der Kopf 13 wird nun gegen die rückwirkende Federkraft des Steges 12 auf einer bogenförmigen Bewegungsbahn von der Aussenseite 6 des Muffenkörpers 2 angehoben. In der Figur 3 ist schematisch der Zustand der Anzeigevorrichtung 25 nach einem Schweissvorgang gezeigt. Die beiden Leitungsteile 18 und 19, die auch Formstücke oder dergleichen sein können, sind hier mit dem Muffenkörper 2 fest verschweisst. Der Kopf 13 ist durch den angehobenen Stift 9 in einer Endposition gehalten, in welcher ein Teil 13a des Kopfes 13 durch das Fenster 14 hindurch nach aussen ragt und sichtbar sowie fühlbar ist. Ist der Teil 13a auf der Aussenseite der Wandung 22 erkennbar, so kann mit grosser Sicherheit auf einen korrekten Schweissvorgang geschlossen werden.

Da der Körper 7, das Anzeigeelement 10 als auch der Muffenkörper 2 vergleichsweise einfache Spritzgussteile sind und das Anzeigeelement 10 bei der Montage problemlos in den Körper 7 eingelegt werden kann, ergibt sich schliesslich eine vergleichsweise kostengünstige Herstellung der Schweissmuffe 1. Da sich die Federkraft des Steges 12 einfach und präzis einstellen lässt und ein Verklemmen beim Auslenken des Kopfes 13 sehr unwahrscheinlich ist, wird eine hohe Funktionssicherheit erreicht.

## Patentansprüche

1. Schweissmuffe zum Verbinden von Leitungsteilen (18, 19) aus thermoplastischem Material, mit einem Muffenkörper (2) und einem Stift (9) als Anzeigevorrichtung zur Überwachung der Schweissung, wobei der Stift (9) in einer Vertiefung (8) des Muffenkörpers (2) angeordnet ist, dadurch gekennzeichnet, dass ein Anzeigeelement (10) an der Aussenseite des Muffenkörpers (2) in einem an diesem angebrachten Teil (7) gelagert ist und mit dem Stift (9) bei einer Schweissung angehoben wird.

2. Muffe nach Anspruch 1, dadurch gekennzeichnet, dass das Anzeigeelement (10) wenigstens bereichsweise in eine Endlage federnd auslenkbar ist.

3. Muffe nach Anspruch 2, dadurch gekennzeichnet, dass der am Muffenkörper (2) angebrachte Teil (7) ein Berührungsschutzkörper für wenigstens einen Anschlussstekker (4) ist.

4. Muffe nach Anspruch 1 bis 3, dadurch gekennzeichnet, dass die Vertiefung als eine Ausnehmung (8) geformt ist.

5. Muffe nach Anspruch 4, dadurch gekennzeichnet, dass in der Ausnehmung (8) der Stift (9) angeordnet ist, dessen Wurzel (21) sich im Schweissbereich des Muffenkörpers (2) befindet.

6. Muffe nach einem der Ansprüche 1 bis 5, dadurch gekennzeichnet, dass das Anzeigeelement (10) so ausgebildet ist, dass es beim Schweissvorgang gegen eine rückwirkende Federkraft ausgelenkt wird.

7. Muffe nach einem der Ansprüche 1 bis 6, dadurch gekennzeichnet, dass das Anzeigeelement (10) einen Kopf (13) aufweist, der an der Aussenseite (6) des Muffenkörpers (2) federnd anliegt und der über einen elastisch biegbaren Steg (12) mit einem im Abstand zum Kopf (13) angeordneten Fuss (11) verbunden ist, welcher am Muffenkörper (2) fixiert ist.

8. Muffe nach Anspruch 7, dadurch gekennzeichnet, dass der genannte Teil (7) über dem Kopf (13) und im Abstand zu diesem ein Fenster (14) aufweist, durch das nach dem Schweissvorgang wenigstens ein Teil (13a) des Anzeigeelementes (10) sich tastbar nach aussen erstreckt.

9. Muffe nach einem der Ansprüche 1 bis 8, dadurch gekennzeichnet, dass der genannte Teil (7) an der Aussenseite (6) des Muffenkörpers (2) angeschweisst oder auf diesen aufgesteckt ist.

10. Muffe nach einem der Ansprüche 1 bis 9, dadurch gekennzeichnet, dass der an der Aussenseite des Muffenkörpers (2) angebrachte Teil (7) auf seiner dem Muffenkörper (2) zugewandten Seite eine Ausnehmung (15) aufweist, in welcher das Anzeigeelement (10) gelagert ist, wobei wenigstens ein Bereich (13) des Anzeigeelementes (10) bogenförmig auslenkbar ist.

## Claims

1. Welding collar for connecting conductor parts (18, 19) formed of thermoplastic material, with a collar body (2) and a bolt (9) as indicating device for monitoring the welding, whereby the bolt (9) is mounted in a depression (8) of the collar body (2), characterized in that an indicating element (10) is mounted at the exterior of the collar body (2) in a part (7) attached to said collar body and in that it is lifted with the bolt (9) during a welding.

2. Collar according to claim 1, characterized in that the indicating element (10) is, at least in part, springably ejectable into an end position.

3. Collar according to claim 2, characterized in that the part (7) attached to the collar body (2) is a contact-voltage proof body for at least one connector plug (4).

4. Collar according to any of claim 1 to 3, characterized in that the depression is formed as a recess (8).

5. Collar according to claim 4, characterized in that the bolt (9) is provided in the recess (8), the root (21) of said bolt (9) being located in the welding region of the collar body (2).

6. Collar according to any of claims 1 to 5, characterized in that the indicating element (10) is formed in such a way that, during the welding process, it is ejected against a retroactive spring resistance.

7. Collar according to any of claims 1 to 6, characterized in that the indicating element (10) is provided with a head (13) which springably fits to the exterior of the collar body (2) which is connected over an elastically pliable web (12) to a foot (11) mounted in a distance to the head (13), which foot is fixed to the collar body (2).

8. Collar according to claim 7, characterized in that said part (7) is provided with a window (14) situated above the head (13) and within a distance to said head, through which window at least one part (13a) of the indicating element (10) extends tangibly towards the exterior.

9. Collar according to any of claims 1 to 8, characterized in that said part (7) is welded or attached to the exterior of the collar body (2).

10. Collar according to any of claims 1 to 9, characterized in that the part (7) attached to the exterior of the collar body (2) is provided with a recess (15) on its side orientated towards the collar body (2), in which recess the indicating element (10) is mounted, whereby at least one area (13) of the indicating element (10) is ejectable in form of a bent.

## Revendications

1. Manchon à souder destiné à réunir deux éléments de conduites (18, 19) en matière thermoplastique, comportant un corps de manchon (2) et une tige (9) en tant que dispositif d'affichage pour le contrôle de la soudure, la tige (9) étant disposée dans un renfoncement (8) du corps (2) du manchon, caractérisé en ce qu'un élément d'affichage (10) est monté sur la face extérieure du corps (2) du manchon dans une partie installée (7) fixée sur ce corps et est soulevé avec la tige (9) lors d'un soudage.

2. Manchon selon la revendication 1, caractérisé en ce que l'élément d'affichage (10) peut être dévié élastiquement au moins par endroits dans une position finale.

3. Manchon selon la revendication 2, caractérisé en ce que la partie (7) installée sur le corps (2) du manchon est un corps de protection contre tout contact pour au moins un connecteur (4).

4. Manchon selon les revendications 1 à 3, caractérisé en ce que le renfoncement est agencé sous la forme d'un évidement (8).

5. Manchon selon la revendication 4, caractérisé en ce que la tige (9), dont la base (21) est située dans la zone de soudage du corps (2) du manchon est disposée dans l'évidement (8).

6. Manchon selon l'une des revendications 1 à 5, caractérisé en ce que l'élément d'affichage (10) est agencé de telle sorte que lors du processus de soudage, il est dévié à l'encontre d'une force élastique de rappel.

7. Manchon selon l'une des revendications 1 à 6, caractérisé en ce que l'élément d'affichage (10) possède une tête (13) qui s'applique élastiquement contre la face extérieure (6) du corps (2) du manchon et est reliée, par l'intermédiaire d'une barrette flexible élastiquement (12), à un pied (11) qui est disposé à distance de la tête (13) et qui est fixé au corps (2) du manchon.

8. Manchon selon la revendication 7, caractérisé en ce que ladite partie (7) possède, au-dessus de la tête (13) et à distance de cette dernière, une fenêtre (14), à travers laquelle après l'opération de soudage au moins une partie (13a) de l'élément d'affichage (10) s'étend extérieurement de manière à pouvoir être manipulée.

9. Manchon selon l'une des revendications 1 à 8, caractérisé en ce que ladite partie (7) est soudée sur la face extérieure (6) du corps (2) du manchon ou est emmanchée sur ce corps.

10. Manchon selon l'une des revendications 1 à 9, caractérisé en ce que la partie (7), fixée sur la face extérieure du corps (2) du manchon, possède, sur son côté tourné vers le corps (2) du manchon, un évidement (15), dans lequel l'élément d'affichage (10) est monté, au moins une partie (13) de l'élément d'affichage (10) pouvant être déviée avec une forme arquée.
